# EUROPÄISCHE PATENTANMELDUNG

(11) **EP 0 576 719 A1**
(43) Veröffentlichungstag der Anmeldung: **05.01.1994**
(21) Anmeldenummer: 92111368.4
(22) Anmeldetag: 03.07.1992
(51) Int. Cl.: G11B 23/03

(54) **Verfahren zur Herstellung eines einstückigen Verschlusses für das Fenster im Gehäuse von Disketten, insbesondere Mikrodisketten aus Endlosmaterial**

(71) Anmelder: SIGMA JAPAN CO., LTD., Tokyo (JP)
(72) Erfinder: Handa, Mitsugu, Tokyo (JP)
(74) Vertreter: Henfling, Fritz, Dipl.-Ing.

(57) **Zusammenfassung**

Zwecks besserer Handhabbarkeit wird im Zusammenhang mit der Herstellung der Verschlüsse für das Fenster im Gehäuse von Disketten, insbesondere Mikrodisketten aus Endlosmaterial vorgeschlagen, die Fertigung zweistufig in der Weise vorzunehmen, daß von dem Endlosmaterial zunächst noch zusammenhängende Gehäusezuschnitte abgelängt werden, die durch Stanzungen mit den Fenstern und den Führungsnasen versehen werden, die mit den Fenstern und Führungsnasen versehenen Gehäusezuschnitte sodann vereinzelt werden und die Gehäusezuschnitte erst dann in die das Gehäuse ausbildende U-Profilform überführt werden, woraus sich die Möglichkeit eines raum- und verpackungssparenden Transports vom Ort der Vorfertigung zum Ort der Endmontage ergibt.

## Beschreibung

Die Erfindung betrifft ein Verfahren zur Herstellung eines einstückigen Verschlusses für das Fenster im Gehäuse von Disketten, insbesondere Mikrodisketten aus Endlosmaterial durch Unterteilung des Endlosmaterials in Verschlußzuschnitte, Ausstanzung der Fenster und der Führungsnasen aus den Zuschnitten und Überführung der mit den Ausstanzungen versehenen Zuschnitte in die den Verschluß ausbildende U-Profilform.

Nach dem Stand der Technik erfolgt die Herstellung solcher Verschlüsse in einer Fertigungslinie, aus dem Endlosmaterial, nämlich Stahlband, dergestalt, daß Gehäusezuschnitte unter Belassen eines Zusammenhanges durch Stanzung abgelängt werden, in den Verschlußzuschnitten die erforderlichen Fenster und Führungsnasen durch Ausstanzungen ausgebildet werden und die mit den Ausstanzungen versehenen Gehäusezuschnitte danach im noch zusammenhängenden Zustand in die den Verschluß ausbildende U-Profilform überführt werden, worauf die Vereinzelung der solchermaßen ausgebildeten Verschlüsse erfolgt. Die Verschlüsse werden dem Diskettenhersteller in aller Regel von Zulieferern beigestellt. Die bereits in ihre endgültigen Form überführten Verschlüsse nehmen beim Transport entsprechenden Raum ein, sind dann auch dementsprechend verpackungsaufwendig. Nicht auszuschließen ist im übrigen beim Transport eine Deformierung der Verschlüsse, die ein Nachrichten vor der Endmontage erforderlich macht. Die angesprochenen Mängel sind naturgemäß dann auch kostenträchtig.

Ausgehend vom Stand der Technik liegt der Erfindung in erster Linie das Bedürfnis nach einer raum- und verpakkungssparenden Beistellung solcher Verschlüsse vom Ort der Vorfertigung zum Ort der Endmontage zugrunde.

Dem Bedürfnis wird dadurch Rechnung getragen, daß das zunächst einstufige Herstellungsverfahren für solche Verschlüsse in ein zweistufiges Verfahren dergestalt überführt wird, daß das Endlosmaterial in einer ersten Stufe in an sich bekannter Weise zunächst in noch über einen Mittelsteg zusammenhängende Verschlußzuschnitte unterteilt sowie die Fenster und Führungsnasen aus den Zuschnitten gestanzt werden und die mit den Ausstanzungen versehenen Zuschnitte sodann vereinzelt werden und die Überführung der vereinzelten mit Ausstanzungen versehenen Zuschnitte erst in einer zweiten Stufe in die verschlußausbildende Profilform überführt werden.

Die in der ersten Fertigungsstufe anfallenden, vereinzelten, mit den erforderlichen Ausstanzungen versehenen Gehäusezuschnitte lassen sich platzsparend zusammenfassen und mit vergleichsweise geringem Verpackungsaufwand verpacken. Dementsprechend gering ist auch der Stauraum für den Transport. Des weiteren entfällt dann auch das Risiko der Deformierung bereits in ihre endgültige Form überführte Verschlüsse während des Transports. Daraus resultiert eine ins Gewicht fallende Einsparung an Kosten, ein bei Massenartikeln nicht zu unterschätzender Effekt.

In der Zeichnung ist die Erfindung weitergehend erläutert. Es zeigen
- Figur 1: eine Mikrodiskette in Draufsicht,
- Figur 2: eine die konventionelle Fertigung des Verschlusses verdeutlichende Abfolge von Darstellungen,
- Figur 3: eine die erfindungsgemäße Fertigung des Verschlusses verdeutlichende Abfolge von Darstellungen.

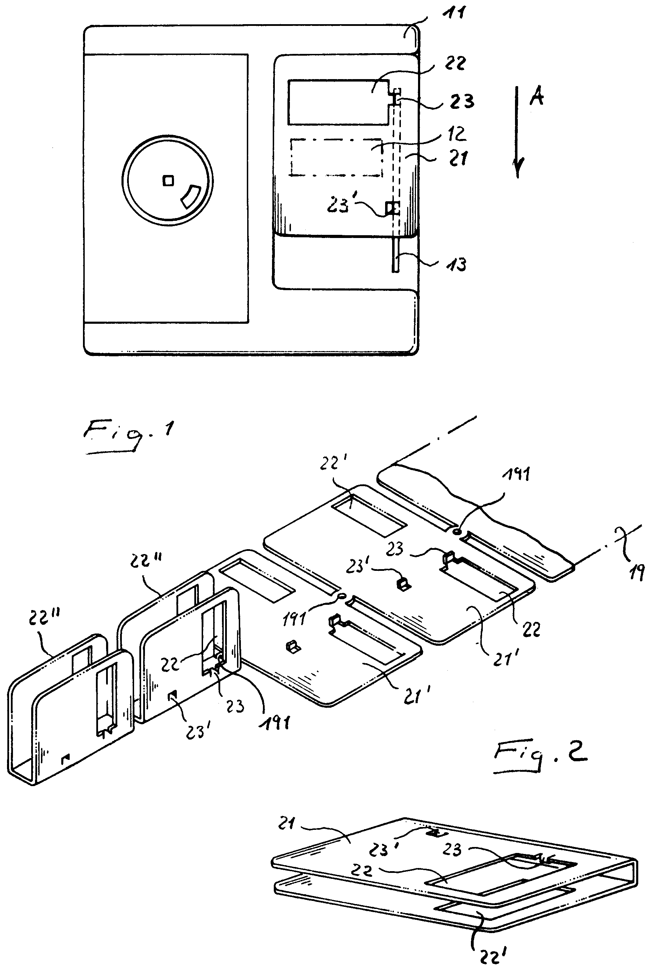

In Figur 1 ist mit 11 das Diskettengehäuse bezeichnet, in dem die Diskette eingelagert ist, zu der ein Zugriff durch das strichpunktiert angedeutete Fenster 12 im Gehäuse 11 möglich ist. Das Fenster 12 ist durch den Verschluß 21 abgesichert, der in Figur 1 in Schließlage dargestellt ist und bei seiner Verlagerung im Sinne des Pfeiles A in Fig. 1 über das in ihm befindliche Fenster 22 den Zugriff bzw. Zugang zur im Diskettengehäuse 11 eingelagerten Diskette ermöglicht. Der Verschluß 22 führt sich mit Nase 23, 23' in eine Nut 13 im Gehäuse 11.

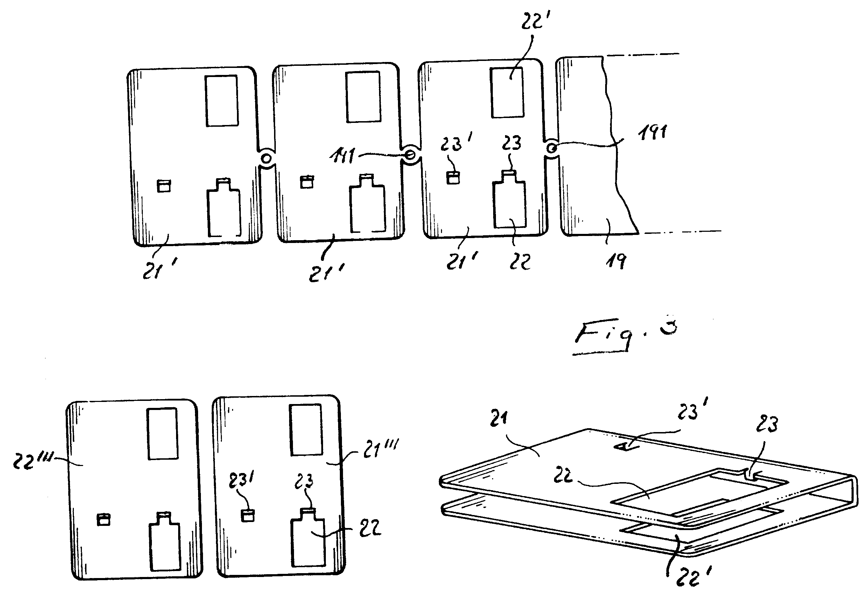

Nach dem aus Figur 2 entnehmbaren Stand der Technik erfolgt die Herstellung des Verschlusses 21 aus Endlosmaterial 19 durch Ausstanzen der Verschlußzuschnitte 21' unter Belassen eines Zusammenhanges 191 zwischen den Zuschnitten 21' und Ausstanzen der Fenster 22, 22' sowie der Führungsnase 23, 23' aus den Verschlußzuschnitten 21' und anschließender Überführung der noch zusammenhängenden (191) mit den Ausstanzungen 22, 22' und 23, 23' versehenen Verschlußzuschnitte 21 in die den Verschluß ausbildenden U-Profilform, woran sich die Vereinzelung der Verschlüsse 21 anschließt. Die Herstellung der Verschlüsse 21 aus dem Vormaterial, nämlich dem Stahlband 19, erfolgt also durchgängig in einer Fertigungslinie und die nach Durchlaufen der Fertigungslinie in ihre endgültigen Form vorliegenden Verschlüsse 21 werden sodann dem Montagebereich beigestellt, in dem die Zusammensetzung der Mikrodiskette aus ihren Einzelbestandteilen, Diskette, Diskettengehäuse und Verschluß erfolgt.

Erfindungsgemäß wird das Diskettengehäuse 21 nunmehr in einen zweistufigen Verfahren hergestellt, wobei in einer ersten Stufe wiederum aus Endlosmaterial 19 zunächst die Verschlußzuschnitte 21' unter Belassen des Zusammenhanges 191 zwischen den Zuschnitten 21' und dann auch die Fenster 22, 22' sowie die Führungsnasen 23, 23' ausgestanzt werden und die Verschlußzuschnitte 21' sodann vereinzelt werden. Die vereinzelten Verschlußzuschnitte 21''' lassen sich raum- und verpackungssparend vom Ort der Vorfertigung zum Ort der Endmontage, an dem die Mikrodiskette komplett montiert wird, überführen, an dem die Verschlußzuschnitte 21''' in die den Verschluß 21 ausbildende U-Profilform überführt werden.

Je nach Auslegung der Fertigungslinie der ersten Stufe erfolgt das Ablängen der Verschlußzuschnitte 21' und das Ausstanzen der Fenster 22, 22' sowie der Führungsnasen 23, 23' aus den Verschlußzuschnitten 21' in verschiedenen Stationen oder aber zusammengefaßt in einem Werkzeug. Für die Oberführung der abgelängten, mit den Ausstanzungen 22, 22' sowie 23, 23' versehenen Verschlußzuschnitte 21''' in die den Verschluß 21 ausbildende U-Profilform stehen am Ort der Endmontage Biege- bzw. Abkantwerkzeuge zur Verfügung.

## Patentansprüche

1. Verfahren zur Herstellung eines einstückigen Verschlusses (21) für das Fenster im Gehäuse von Disketten, insbesondere Mikrodisketten aus Endlosmaterial (19) durch Unterteilung des Endlosmaterials (19) in Verschlußzuschnitte (21'), Ausstanzung der Fenster (22) und der Führungsnasen (23) aus den Zuschnitten (21') und Überführung der mit den Ausstanzungen (21') versehenen Zuschnitte in die den Verschluß ausbildenden U-Profilform, dadurch gekennzeichnet, daß das Endlosmaterial (19) in an sich bekannter Weise zunächst in noch über ein Mittelsteg (191) zusammenhängende Verschlußzuschnitte (21') unterteilt und die Fenster (22) sowie Nasen (23) aus den Zuschnitten (21) gestanzt werden, die mit den Ausstanzungen (21') versehenen Zuschnitte (21') sodann vereinzelt werden und die vereinzelten, mit den Ausstanzungen (22, 23) versehenen Zuschnitte (21''') danach in die den Verschluß ausbildende U-Profilform (21) überführt werden.
